# EUROPEAN PATENT APPLICATION

(11) **EP 4 776 235 A1**
(43) Date of publication of application: **15.07.2026**
(21) Application number: 24862722.6
(22) Date of filing: 30.08.2024
(51) Int. Cl.: G06T 19/00, G06F 3/01

(54) **INFORMATION PROCESSING DEVICE, INFORMATION PROCESSING SYSTEM, INFORMATION PROCESSING METHOD, AND PROGRAM**

(30) Priority: 04.09.2023 JP 2023142964
(71) Applicant: Canon Kabushiki Kaisha, Tokyo 146-8501 (JP)
(72) Inventor: NABESHIMA Rui, Tokyo 146-8501 (JP)
(74) Representative: Canon Europe Limited
(86) International application number: PCT/JP2024/031188
(87) International publication number: WO 2025/053070

(57) **Abstract**

An information processing apparatus is characterized by including acquisition means for acquiring a captured image, and control means for controlling a display unit to selectively display an image of a mixed reality space, which is a composite image of the captured image acquired by the acquisition means and an image of a virtual object, and an image of a virtual space, and for controlling whether to display, on the display unit, a screen for setting a boundary in a real space based on whether the image to be displayed on the display unit is the image of the mixed reality space or the image of the virtual space.

## Description

### Technical Field

The present disclosure relates to an information processing apparatus.

### Background Art

Virtual reality (VR) technology is known as a technology by which a virtual space can be experienced. Further, so-called a mixed reality (MR) technology (mixed-reality technology) is known as a technology that seamlessly fuses a real space and a virtual space in real time. As an apparatus by which such technology can be experienced, for example, a head mounted type device represented by a head mounted display (HMD) is used. However, wearing an HMD makes it difficult to check the surroundings, which may lead to a risk of colliding with obstacles.

Therefore, for example, according to PTL 1, a method is known in which a boundary of an area (play area) in which a user can safely move is set in advance, a warning is issued to the user if he or she approaches the boundary line of the area to reduce a risk of the user colliding with an obstacle.

### Citation List

### Patent Literature

PTL 1: Japanese Unexamined Patent Application Publication (Translation of PCT Application) No. 2017-535901

### Summary of Invention

### Technical Problem

The timing of setting an area (play area) in which a user can move safely is often at the time of activation of an HMD. In a case where the VR technology is desired to be used, the surrounding real space cannot be seen, and thus, setting a play area enables the technology to be used safely. However, in a case where the MR technology, in which the surrounding real space can be seen, is desired to be used, a user can visually recognize an obstacle, thereby reducing a risk of colliding with the obstacle, and thus a necessity of setting the play area decreases. Even in a case where the necessity of setting the play area is low, a configuration in which the setting of the play area is always required is troublesome for the user. Therefore, the present disclosure is directed to the provision of a system that is capable of improving operability by minimizing time and effort for setting a play area.

### Solution to Problem

According to one aspect of the present disclosure, an information processing apparatus includes acquisition means for acquiring a captured image, and control means for controlling a display unit to selectively display an image of a mixed reality space, which is a composite image of the captured image acquired by the acquisition means and an image of a virtual object, and an image of a virtual space, and for controlling whether to display, on the display unit, a screen for setting a boundary in a real space, based on whether an image to be displayed on the display unit is the image of the mixed reality space or the image of the virtual space.

### Advantageous Effects of Invention

According to the present disclosure, it is possible to provide a system that is capable of improving operability by minimizing time and effort for setting a play area. Brief Description of Drawings

[Fig. 1] Fig. 1 is a diagram illustrating an information processing system according to a first embodiment.
[Fig. 2] Fig. 2 is an internal configuration diagram of a head mounted display (HMD) and the like according to the first embodiment.
[Fig. 3] Fig. 3 is a diagram illustrating a real space in which a user wearing the HMD according to the first embodiment is present.
[Fig. 4A] Fig. 4A is a diagram illustrating an example of a screen of a virtual space according to the first embodiment.
[Fig. 4B] Fig. 4B is a diagram illustrating an example of a screen of a mixed reality space according to the first embodiment.
[Fig. 4C] Fig. 4C is a diagram illustrating an example of a home screen of a virtual space according to the first embodiment.
[Fig. 4D] Fig. 4D is a diagram illustrating an example of a home screen of a mixed reality space according to the first embodiment.
[Fig. 4E] Fig. 4E is a diagram illustrating an example of a pop-up screen provided with a button for a user to select whether to set a play area according to the first embodiment.
[Fig. 4F] Fig. 4F is a diagram illustrating an example of a pop-up screen provided with a button for a user to select whether to display a home screen in a virtual reality (VR) mode according to the first embodiment.
[Fig. 4G] Fig. 4G illustrates a scene in the middle of setting an area to serve as a play area by moving a controller so as to draw a line serving as a boundary of the play area along a plane in a real space according to the first embodiment.
[Fig. 4H] Fig. 4H is a diagram illustrating an example of a screen when setting of the play area is completed according to the first embodiment.
[Fig. 4I] Fig. 4I illustrates an example of a screen that presents warning information to a user in a case where the user approaches or crosses the boundary of the play area according to the first embodiment.
[Fig. 5] Fig. 5 is a flowchart illustrating a procedure of processing for displaying a play area setting screen in accordance with an application according to the first embodiment.
[Fig. 6] Fig. 6 is a diagram illustrating a screen display example according to a second embodiment.
[Fig. 7] Fig. 7 is a flowchart illustrating a procedure of processing for displaying a play area setting screen in accordance with a proportion of computer graphics (CG) (virtual object) in an application to be launched in a mixed reality (MR) mode according to the second embodiment.
[Fig. 8] Fig. 8 illustrates a screen display example according to a third embodiment.
[Fig. 9] Fig. 9 is a flowchart illustrating a procedure of processing for launching a VR application without setting a play area in a case where little movement is expected in a scene according to the third embodiment.

### Description of Embodiments

Hereinafter, embodiments will be described in detail with reference to the accompanying drawings. It should be noted that the following embodiments do not limit the disclosure according to the claims. Although a plurality of features is described in the embodiments, not all of these features are necessarily essential to the disclosure, and the plurality of features may be combined as appropriate. Furthermore, in the accompanying drawings, identical or similar components are denoted by the same reference numerals, and redundant descriptions are omitted.

### (First Embodiment)

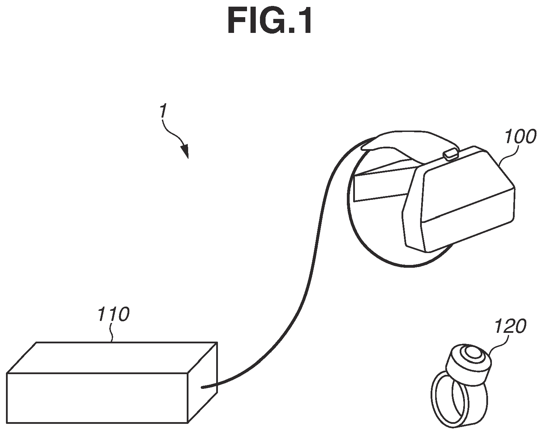

An information processing system 1 according to a first embodiment will be described with reference to Fig. 1. The information processing system 1 includes a head mounted display (HMD) 100, a personal computer (PC) 110, and a controller 120.

The HMD 100 is a head mounted type display device (electronic device) that is wearable on a user's head. The HMD 100 displays a composite image obtained by combining a captured image obtained by the HMD 100 capturing a range in front of a user with content such as computer graphics (CG) in a form corresponding to an orientation of the HMD 100.

The PC 110 controls the HMD 100. The PC 110 is connected to the HMD 100 via a wired connection such as a Universal Serial Bus (USB) cable, or via a wireless connection, such as Bluetooth^{®} or Wireless Fidelity (Wi-Fi^{®}). The PC 110 generates a composite image by combining a captured image and CG and transmits the composite image to the HMD 100. Here, the PC is described as an example of an information processing apparatus, but the information processing apparatus is not limited thereto. For example, the information processing apparatus may be a smartphone or a tablet terminal, and the HMD 100 may include each component of the PC 110.

The controller 120 performs various types of control of the HMD 100. In a case where the PC 110 is in a specific control mode, when a user operation is performed on the controller 120, the HMD 100 is controlled in response to the user operation. As illustrated in Fig. 1, the controller 120 may have a ring shape (ring-type) that can be worn on and supported by a user's finger or a handheld shape that can be held by the user's hand. Further, the controller 120 includes a physical button for performing a determination operation or a selection operation on a display. The controller 120 performs wireless communication with the PC 110 via Bluetooth. The controller is not limited to a system that communicates with the PC 110, but may also be a system that communicates with the HMD 100.

By moving the controller 120, the user can change an indication position on the display in accordance with the movement of the controller. The indication position may be represented by a point, or may be represented by a virtual light ray (ray) by connecting the point of the indication position and the controller with a straight line (line segment) or a dashed line. By pressing the physical button, a determination operation or a selection operation for a menu can be performed. Although the shape of the controller 120 has been described as having a ring shape or a handheld shape, it is not limited thereto as long as the controller can be supported by a finger, a hand, or an arm. Further, although the button has been described as being a physical button, it may be any operable component such as a trackpad, a touch panel, a wheel, or a trackball, and, in addition to pressing of the button, a slide operation, a flick operation, and a touch operation are also acceptable.

The controller may be worn on at least one finger, a hand, or an arm.

The controller may be arranged on an object grasped by the hand, and position information and orientation information of the attached position may be acquired from a sensor. Examples of such an object include an object shaped like a tool.

### <Internal Configuration of HMD>

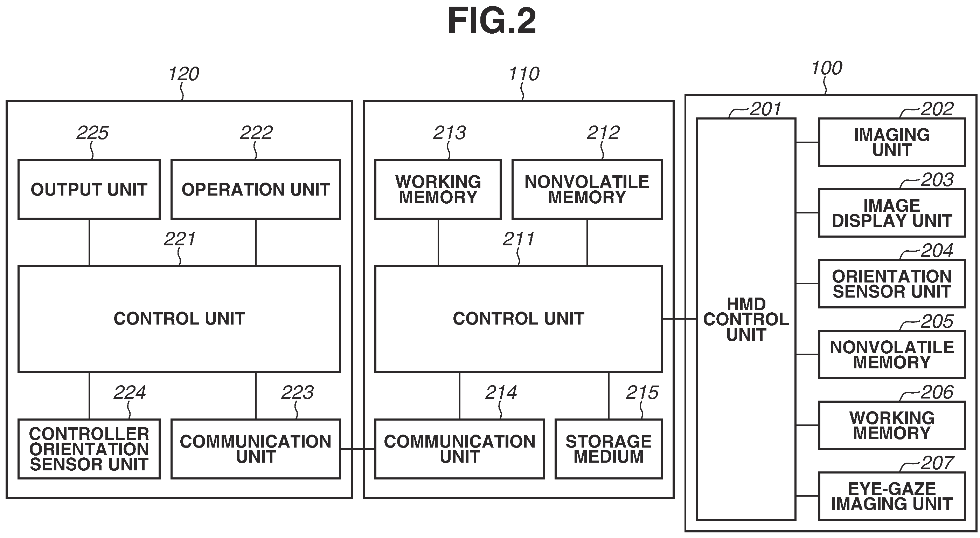

An internal configuration of the HMD 100 will be described with reference to Fig. 2. The HMD 100 includes an HMD control unit 201, an imaging unit 202, an image display unit 203, an orientation sensor unit 204, a nonvolatile memory 205, a working memory 206, and an eye-gaze imaging unit 207.

The HMD control unit 201 is a central processing unit (CPU) that controls each component of the HMD 100. When a composite image (an image obtained by compositing a captured image, which is captured by the imaging unit 202 capturing a space in front of the user, with CG) is acquired from the PC 110, the HMD control unit 201 displays the composite image on the image display unit 203. Instead of the HMD control unit 201 controlling the entire apparatus, a plurality of hardware components may share processing to control the entire apparatus.

The imaging unit 202 includes two cameras (imaging apparatuses). The two cameras are configured to capture images to be used for compositing with an image of a virtual space and for generating position and orientation information, and include a left eye imaging unit and a right eye imaging unit. The left eye imaging unit captures a moving image of a real space corresponding to the left eye of the wearer of the HMD 101 and outputs an image (captured image) of each frame in the moving image. The right eye imaging unit captures a moving image of a real space corresponding to the right eye of the wearer of the HMD 101 and outputs an image (captured image) of each frame in the moving image. In other words, the imaging unit 202 acquires a captured image as a stereo image having parallax that substantially matches the respective positions of the left and right eyes of the wearer of the HMD 101. Further, information about a distance from the two cameras to a subject can be acquired as distance information by measuring the distance using a stereo camera. In an HMD for a mixed reality (MR) system, it is desirable that a central optical axis of an imaging range of the imaging unit is arranged so as to substantially coincide with a gaze direction of the wearer of the HMD.

The left eye imaging unit and the right eye imaging unit each include an optical system and an imaging device. Light entering from the outside passes through the optical system and enters the imaging device, and the imaging device outputs an image corresponding to the incident light as a captured image. Images captured by the two cameras by imaging a subject (a range in front of the user) are output to the PC 110 and the control unit 201. The imaging unit 202 may capture and output a video instead of a captured image.

The image display unit 203 displays a composite image. The image display unit 203 includes a liquid crystal panel, an organic electroluminescence (EL) panel, or the like. In a state where the user is wearing the HMD 100, the image display unit 203 is arranged in front of each of the user's eyes. For the image display unit 203, a device using a semi-transmissive half mirror may also be used. In this case, for example, the image display unit 203 may display an image in such a manner that CG appears to be directly superimposed on the real space that is visible through the half mirror by a technique generally referred to as augmented reality (AR). Further, the image display unit 203 may display an image of a completely virtual space without using captured images by a technique generally referred to as virtual reality (VR).

The orientation sensor unit 204 acquires orientation (and position) information of the HMD 100. The orientation sensor unit 204 may also acquire orientation information of the user (user wearing the HMD 100) corresponding to the orientation (and position) of the HMD 100. The orientation sensor unit 204 includes an inertial measurement unit (IMU) configured with an acceleration sensor, an angular acceleration sensor, and a geomagnetic sensor. The orientation sensor unit 204 is used to acquire information about an orientation of the user (orientation information), and the HMD control unit 201 outputs the information about the orientation of the user (orientation information) to the PC 110. The orientation information may be acquired from at least one of a magnetic sensor (including a geomagnetic sensor), an ultrasonic sensor, an acceleration sensor, and an angular velocity sensor.

The HMD control unit 201 estimates a position or an orientation of each joint point of the user's hand and fingers from images of the two cameras acquired by the imaging unit 202. The joint points include points that serve as features of parts such as joints of the fingers, fingertips, the back (or palm) of the hand, and an arm. Each joint point indicates a coordinate position, and the orientation can be estimated from information of a plurality of joint points. As a method for estimating the position or the orientation of the hand and each joint point of the hand, for example, a known object recognition or pose estimation method of machine learning using a convolutional neural network can be used. In addition, position information in a depth direction of each joint point of the hand can be acquired, for example, by calculating a distance from the imaging unit 202 to each joint point by triangulation based on stereo matching using the images of the two cameras acquired by the imaging unit 202. The estimated coordinate information of each joint point of the hand is output from the control unit 201 to the PC 110.

The nonvolatile memory 205 is an electrically erasable and recordable nonvolatile memory, and stores a program to be executed by a control unit 211, which will be described below, or the like.

The working memory 206 is used as a buffer memory for temporarily storing image data captured by the imaging unit 202, an image display memory for the image display unit 203, a work area for the control unit 201, and the like.

The eye-gaze imaging unit 207 is a camera that acquires an image for detecting an eye gaze of the user, and is attached to the inner side of the HMD to capture an eye of the user when the user wears the HMD 100. An image of a subject (the user's eyes) captured by the camera is output to the control unit 211 of the PC 110 via the HMD control unit 201. The control unit 211 detects an eye gaze of the user wearing the HMD 100 from the image captured by the eye-gaze imaging unit 207 and identifies a point on the image display unit 203 where the user is gazing.

### <Internal Configuration of Controller>

An internal configuration of the controller 120 will be described with reference to Fig. 2. The controller 120 includes a controller control unit 221, an operation unit 222, a communication unit 223, and a controller orientation sensor unit 224.

The controller control unit 221 is a CPU that controls each component of the controller 120. Instead of the controller control unit 221 controlling the entire apparatus, a plurality of hardware components may share processing to control the entire apparatus.

The operation unit 222 includes a button. The operation unit 222 detects whether the button is operated and transmits detection information to the PC 110 via the communication unit 223. The operation unit 222 may have a plurality of types of input forms.

The communication unit 223 performs wireless communication with the PC 110 via Bluetooth. In a case where there is a plurality of controllers, each of them performs wireless communication with the PC 110 via Bluetooth.

The controller orientation sensor unit 224 includes an inertial measurement unit (IMU) configured with an acceleration sensor, an angular acceleration sensor, and a geomagnetic sensor. The inertial measurement unit detects a change in the position or the orientation of the controller 120. The detected change information of the position and the orientation is communicated from the communication unit 223 to the PC 110 via the controller control unit 221.

An output unit 225 is configured with a light-emitting diode (LED) light source, a loudspeaker, a vibrating element, and the like.

### <Internal Configuration of PC>

An internal configuration of the PC 110 will be described with reference to Fig. 2. The PC 110 includes the control unit 211, a nonvolatile memory 212, a working memory 213, a communication unit 214, and a storage medium 215.

The control unit 211 is a CPU that controls each unit of the PC 110 according to an input signal and a program described below. Instead of the control unit 211 controlling the entire apparatus, a plurality of hardware components may share processing to control the entire apparatus. The control unit 211 receives, from the HMD 100, an image (captured image) acquired by the imaging unit 202 and the orientation information acquired by the orientation sensor unit 204. The control unit 211 performs image processing on the captured image so as to cancel aberrations in the optical system of the imaging unit 202 and the optical system of the image display unit 203. Then, the control unit 211 combines the captured image with arbitrary CG to generate a composite image. The control unit 211 transmits the composite image to the HMD control unit 201 in the HMD 100.

The control unit 211 calculates the number of the controllers included in the captured image. Further, the control unit 211 executes processing for recognizing a position where each controller is arranged, using information acquired via the communication unit 214. Then, in accordance with the recognized result, the control unit 211 performs control to change an operation content for each controller with respect to input information of each controller.

The control unit 211 controls a position, a direction, and a size of CG in the composite image based on information (distance information and orientation information) acquired by the HMD 100. For example, in a case where a virtual object represented by CG is arranged near a specific object that exists in the real space in a space represented by the composite image, the control unit 211 makes the virtual object (CG) larger as a distance between the specific object and the imaging unit 202 becomes shorter. By controlling the position, direction, and size of the CG in this way, the control unit 211 can generate a composite image in which a CG object that is not arranged in the real space appears as if it were arranged in the real space.

In addition, the control unit 211 also receives information estimated by the control unit 201 of the HMD 100. The received information is temporarily stored in the working memory 213.

Further, in the control unit 211, the communication unit 214 receives change information about the position or the orientation of the controller 120 from the communication unit 223 of the controller 120. The control unit 211 superimposes and displays, on the composite image, the indication position corresponding to the change information about the position or the orientation of the controller 120. The control unit 211 may also superimpose and display, on the composite image, the indication position corresponding to the change information about the position and the orientation of the controller 120.

The nonvolatile memory 212 is an electrically erasable and recordable nonvolatile memory, and stores a program to be executed by the control unit 211, which will be described below, and information about CG or the like. The control unit 211 can switch CG to be read from the nonvolatile memory 212 (that is, the CG to be used to generate the composite image).

The working memory 213 is used as a buffer memory for temporarily storing image data captured by the imaging unit 202 and time-series information of an estimated coordinate position of each joint point of the hand, an image display memory for the image display unit 203, a work area for the control unit 211, and the like.

In addition, estimation of a wrist joint may be performed in the PC 110. In that case, after the captured image is output from the imaging unit 202 to the PC 110, the control unit 211 of the PC 110 estimates the position or the orientation of each joint point of the hand, processes the image using the estimated information, and outputs it to the HMD 100. The control unit 211 may estimate the position and the orientation of each joint point of the hand, process the image using the estimated information, and output the image to the HMD 100.

In components of the MR system other than those described above, for example, in a control unit of either the HMD 100 or the PC 110, various types of image processing are performed on a captured image acquired by the imaging unit 202 or a display image displayed on the image display unit 203. However, this is not the main focus of the present disclosure, so that a description thereof is omitted.

### <Setting of Play Area>

The user sets up a play area where he or she can work safely while wearing the HMD.

The play area may be set such that the user can freely draw it (for example, a shape along the shape of a room), or may be a fixed area based on the user's initial position (for example, within two meters around the user). Further, the user may use the controller or hand tracking in setting the play area. In a case where the controller is used, the play area is set based on a detection result of the position or the orientation of the controller. The play area may be set by a ray operation using the orientation of the controller, or the play area may be set based on the detection result of the position of the controller using the position and the orientation of the controller.

In a case where it is determined that the position of the HMD estimated by the orientation sensor unit 204 approaches the boundary of the play area or crosses the play area, the user is notified.

In a case where it is determined that the space is a space for which the play area has been already set, the play area setting can be omitted by using play area information that has been already set.

### <Processing for Displaying Play Area Setting Screen According to Home Screen Setting Status and Whether Application is VR or MR>

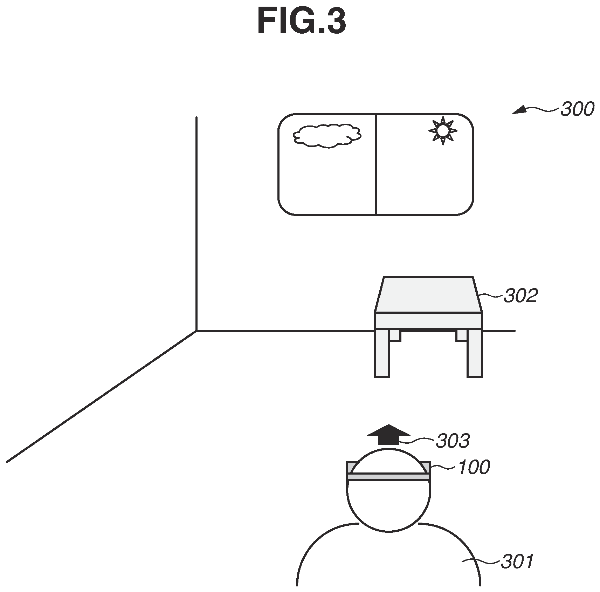

An example of a real space in which a user operates the HMD will be described with reference to Fig. 3. In a real space 300, a user 301, the HMD 100 worn by the user 301, and a desk 302 are illustrated, and the user 301 views in the direction of arrow 303 through the HMD 100.

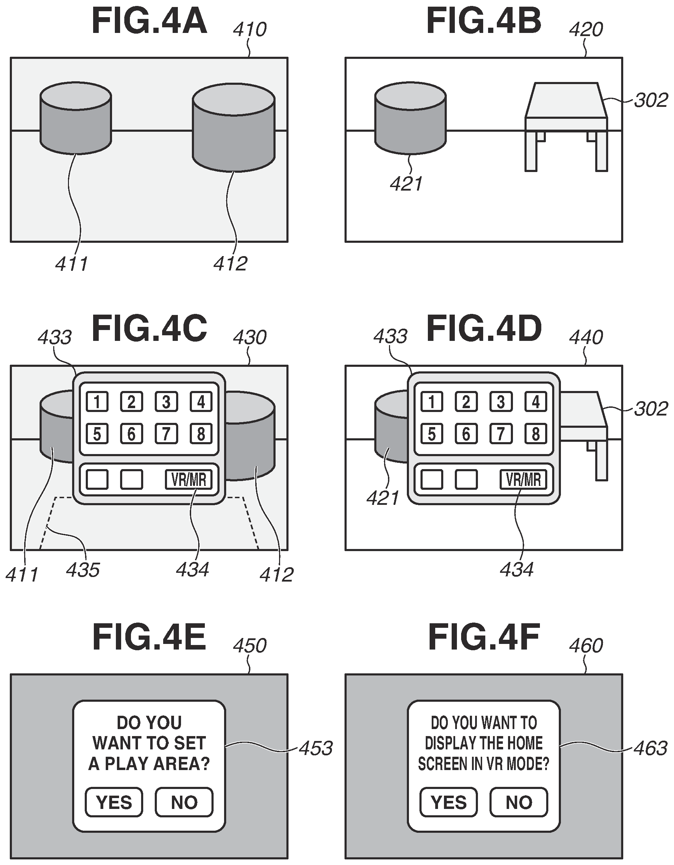

A screen displayed on the HMD 100 illustrated in Fig. 3 will be described with reference to Figs. 4A and 4B. Fig. 4A illustrates an example of a screen of a virtual space, that is, a VR screen. On a screen 410, virtual objects 411 and 412 are displayed. The virtual object 412 is displayed so as to be superimposed on the desk 302. The screen 410 does not display the real space, and the entire screen is composed of CG. Fig. 4B illustrates an example of a screen of a mixed reality space, that is, an MR screen. On a screen 420, a virtual object 421 and the desk 302, which is a real object, are displayed. On the screen 420, the virtual object 421 is displayed superimposed on the real space. The HMD 100 in Fig. 3 displays screens as illustrated in Figs. 4A and 4B.

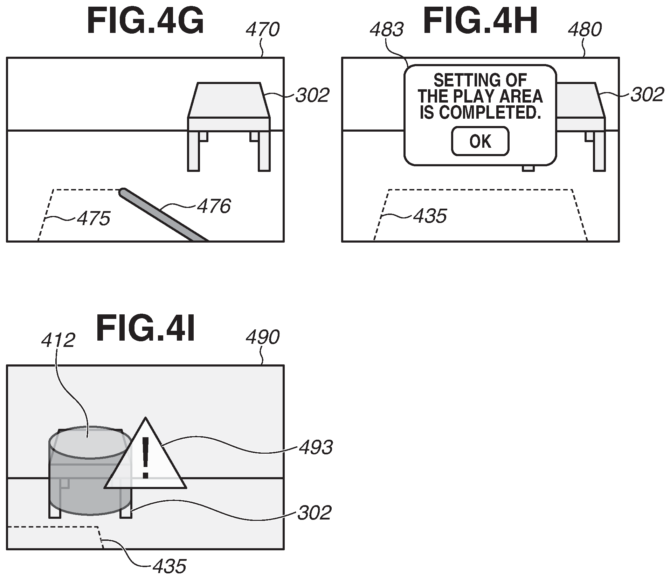

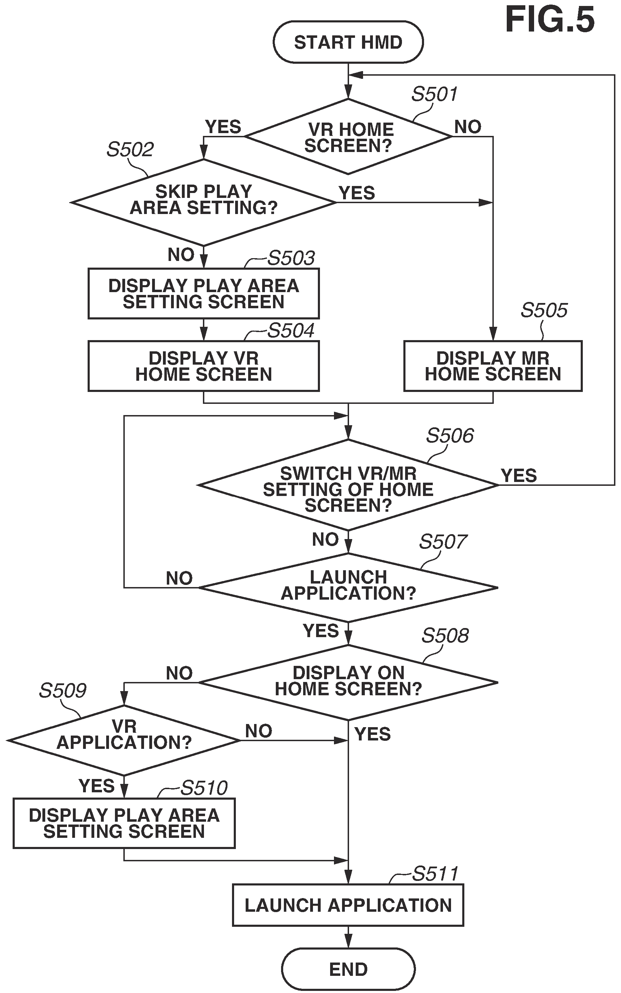

Processing for displaying a play area setting screen in accordance with the setting of the HMD and an application to be launched will be described with reference to Figs. 4C, 4D, 4E, 4F, 4G, 4H, 4I, and 5. In Fig. 5, when the user turns on the power of the HMD, the processing proceeds in accordance with the flow described below.

In step S501, the control unit 211 determines whether a home screen is VR. In a case where the control unit 211 determines that the home screen is VR, that is, determines that the home screen is an image of a virtual space (YES in step S501), the processing proceeds to step S502. In a case where the control unit 211 determines that the home screen is not VR (is MR) (NO in step S501), the processing proceeds to step S505.

The home screen refers to a screen on which settings of the HMD can be performed and various installed applications can be selected and launched. For example, a home screen including an image of a virtual space as illustrated in Fig. 4C or a home screen including an image of a mixed reality space as illustrated in Fig. 4D is displayed, and the user can select a desired application from among one or more applications.

Fig. 4C illustrates a home screen for a virtual space in which a menu screen 433 is displayed. On the menu screen 433, a VR/MR switch button 434 and icons for launching various applications are displayed. Further, a boundary 435 of the play area set before displaying the VR screen is displayed. The boundary 435 of the play area may be always displayed, or may be displayed only when a user approaches the boundary.

Fig. 4D illustrates a home screen for a mixed reality space in which the menu screen 433 is displayed. On the menu screen 433, the VR/MR switch button 434 and the icons for launching various applications are displayed.

Here, the VR/MR switch button 434 allows the user to switch the home screen between a VR mode and an MR mode. That is, the composite image and the image of the virtual space can be selectively set as the home screen. Here, the VR mode is a mode in which the image of the virtual space is displayed and the real space is not displayed on the image display unit. As the image of the virtual space, an image corresponding to the position or the orientation of the HMD may be displayed based on the captured image acquired by the imaging unit 202, or an image not corresponding to the position or the orientation of the HMD may also be displayed. In the VR mode, in a case where it is determined that a dangerous situation occurs, the captured image or the composite image obtained by superimposing CG on the captured image may be displayed. Further, the MR mode is a mode in which the composite image obtained by superimposing CG on an image corresponding to the position or the orientation of the HMD based on the captured image acquired by the imaging unit 202 is displayed on the image display unit. In the MR mode, in a case where it is determined that a dangerous situation occurs, the captured image may be displayed without superimposing CG. The processing performed when the VR/MR switch button 434 is operated will be described below in step S506.

In step S502, the control unit 211 determines whether the user issues an instruction to skip the play area setting. In a case where the control unit 211 determines that the user issues the instruction to skip the play area setting (YES in step S502), the processing proceeds to step S505, and in a case where the control unit 211 determines that the user does not issue the instruction to skip the play area setting (NO in step S502), the processing proceeds to step S503. Here, on a screen 450 illustrated in Fig. 4E, buttons for allowing the user to select whether to set a play area are provided on a pop-up screen 453. On this screen, an operation of not setting the play area corresponds to the instruction to skip the play area setting, and an operation of setting the play area corresponds to an instruction not to skip the play area setting. Further, on a screen 460 illustrated in Fig. 4F, buttons for allowing the user to select whether to display a home screen in the VR mode are provided on a pop-up screen 463. On this screen, an operation of not displaying the home screen in the VR mode corresponds to the instruction to skip the play area setting, and an operation of displaying the home screen in the VR mode corresponds to an instruction not to skip the play area setting, that is, an instruction to perform the play area setting. On the screen illustrated in Fig. 4F, instead of the buttons for allowing the user to select whether to display the home screen in the VR mode, buttons for allowing the user to select whether to display a home screen in the MR mode may be provided. On this screen, an operation of displaying a home screen in the MR mode corresponds to the instruction to skip the play area setting, and an operation of not displaying the home screen in the MR mode corresponds to an instruction not to skip the play area setting, that is, an instruction to perform the play area setting. On the screen illustrated in Fig. 4F, instead of the button for allowing the user to select whether to display the home screen in the VR mode, buttons for selecting whether to display the home screen in the VR mode or to display the home screen in the MR mode may be provided. On this screen, an operation of displaying the home screen in the MR mode corresponds to the instruction to skip the play area setting, and an operation of displaying the home screen in the VR mode corresponds to an instruction not to skip the play area setting, that is, an instruction to perform the play area setting.

In a case where it is determined that the user issues the instruction to skip the play area setting, the home screen can be quickly displayed by switching from the VR screen set on the home screen to the MR screen.

In step S503, the control unit 211 displays a play area setting screen, and the user sets a play area in accordance with the screen. Fig. 4G illustrates an example of a screen used when setting the play area. In setting the play area, the user moves the controller along a plane of a real space so as to draw a line that serves as the boundary of the play area, thereby setting an area as the play area. A screen 470 is assumed to be a scene in which the boundary of the play area is being set. Here, a ray 476 is a virtual object displayed so as to appear to extend from the controller, changes in accordance with the movement of the controller, and represents a position pointed to by the controller. The ray is indicated to point, as if drawing a line, to a dashed line 475 that serves as the boundary of the play area. Fig. 4H illustrates an example of a screen when the play area setting has been completed. On a screen 480 in Fig. 4H, a boundary 435 of the set play area is displayed, and a pop-up screen 483 notifying that the setting of the play area has been completed is displayed. While the play area setting is performed in Figs. 4G and 4H, the image captured by the imaging unit 202 is displayed, and the dashed line 475 serving as the boundary of the play area, the boundary 435 of the play area, the ray 476, and the like are displayed as CG.

Here, the play area is set as an area where the user operates the HMD, an area where the user is allowed to be present, or an area where the user can move safely in the real space. For example, in a case where the play area is an allowed area where the user is allowed to be present, an area outside the play area is a non-allowed area where the user is not allowed to be present. Further, in a case where the user has gone out of the play area, that is, in a case where the user approaches the boundary of the play area or has crossed the boundary, warning information is presented to the user. As illustrated in Fig. 4I, the warning information is displayed superimposed on an image to be displayed. Fig. 4I illustrates a VR screen in a scene in which the user has gone out of the play area. On a screen 490 in Fig. 4I, the virtual object 412 has been displayed so as to be superimposed on the desk 302. However, since the user 301 has gone out of the set play area, the virtual object 412 is made semi-transparent so that the desk 302 is visible, and a warning display 493 is displayed superimposed.

As a method for presenting the warning information to the user, the warning information may be presented by sound or vibration, the sound may be output from the HMD or the controller, and the HMD or the controller may be vibrated. Further, the HMD and the controller may present the same warning information, or may present different warning information.

In step S503, the play area is set; however, an obstacle or an area where safety is not guaranteed may be specified instead of the play area, and an area other than the specified area may be regarded as the play area.

Instead of making the virtual object 412 semi-transparent, a captured image captured by the imaging unit 202 may be displayed.

In step S504, the control unit 211 displays a home screen in the VR mode. For example, a home screen of an image of a virtual space as illustrated in Fig. 4C is displayed.

In step S505, the control unit 211 displays a home screen in the MR mode. For example, a home screen of an image of a mixed reality space as illustrated in Fig. 4D is displayed.

In step S506, the control unit 211 determines whether the user has issued an instruction to switch the VR/MR setting of the home screen. In a case where the control unit 211 determines that the instruction to switch the VR/MR setting of the home screen has been issued (YES in step S506), the processing proceeds to step S501, and in a case where the control unit 211 determines that the instruction to switch the VR/MR setting of the home screen has not been issued (NO in step S506), the processing proceeds to step S507. For example, in a case where the VR/MR switch button 434 is operated on the home screen illustrated in Fig. 4C, it is determined that the instruction to switch the VR/MR setting of the home screen has been issued. In the example illustrated in Fig. 4C, the operation of the VR/MR switch button 434 is an operation of switching from the home screen in the VR mode to the home screen in the MR mode. Further, in a case where the VR/MR switch button 434 is operated on the home screen illustrated in Fig. 4D, it is determined that the instruction to switch the VR/MR setting of the home screen has been issued. In the example illustrated in Fig. 4D, the operation of the VR/MR switch button 434 is an operation of switching from the home screen in the MR mode to the home screen in the VR mode.

In step S507, the control unit 211 determines whether the user has issued an instruction to launch an application. In a case where the control unit 211 determines that the instruction to launch the application has been issued (YES in step S507), the processing proceeds to S508, and in a case where the control unit 211 determines that the instruction to launch the application has not been issued (NO in step S507), the processing proceeds to step S506. For example, on the home screen illustrated in Fig. 4C, an operation of selecting and launching the application is performed by operating the button of the controller. In a case where such an operation is not performed, the control unit 211 determines that the instruction to launch the application has not been issued.

In step S508, the control unit 211 determines whether the application instructed to be launched is to be displayed on the home screen. The control unit 211 determines whether the application is to be displayed on the home screen based on the type of the application and the settings of the HMD. In a case where the control unit 211 determines that the application instructed to be launched is to be displayed on the home screen (YES in step S508), the processing proceeds to step S511, and in a case where the control unit 211 determines otherwise (NO in step S508), the processing proceeds to step S509. In a case where the application is displayed on the home screen, a plurality of applications can be launched simultaneously, and the plurality of applications can be used simultaneously. Further, in a case where the application is displayed on the home screen, the VR or MR mode is maintained based on the setting of the home screen.

In step S509, the control unit 211 determines whether the application instructed to be launched is a VR application. In a case where it is determined that the application is a VR application (YES in step S509), the processing proceeds to step S510, and in a case where the application is not a VR application, that is, in a case where it is determined the application is an MR application (NO in step S509), the processing proceeds to step S511.

In step S510, the control unit 211 displays the play area setting screen, and the user sets a play area in accordance with the screen. In a case where the play area has been set to display a VR screen on the home screen, the processing in step S510 may be omitted.

In step S511, the control unit 211 launches the application instructed to be launched.

In a case where the launched application is an MR application, it is conceivable that there is an HMD that can temporarily turn off a video of a real space. Further, it is also conceivable that the displayed video of the HMD has a large display ratio of CG, and it becomes difficult to visually confirm the video of the real space. In this way, in a case where the user becomes unable to confirm the video of the real space during launch of the MR application or is in a situation where it is difficult to confirm the video of the real space, the user may be prompted to set the play area at that timing.

In a case where switching between the VR mode and the MR mode is performed in common for the home screen and the application, the play area setting screen may be displayed in a case where the mode is the VR mode when the HMD is launched, or in a case where the mode is switched from the MR mode to the VR mode.

### (Second Embodiment)

According to a second embodiment, in the MR mode, a system will be described that sets a play area in a case where a proportion of an image of a virtual object in a displayed composite image is a predetermined value or more.

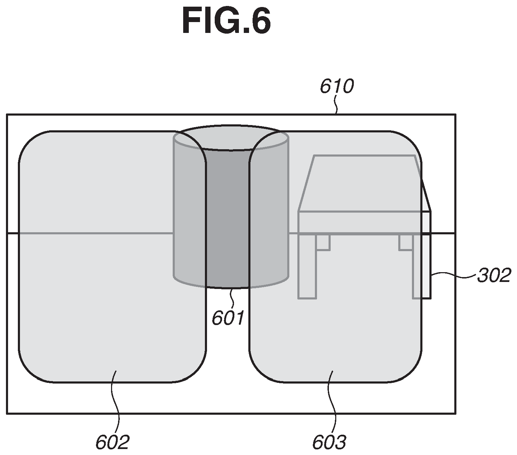

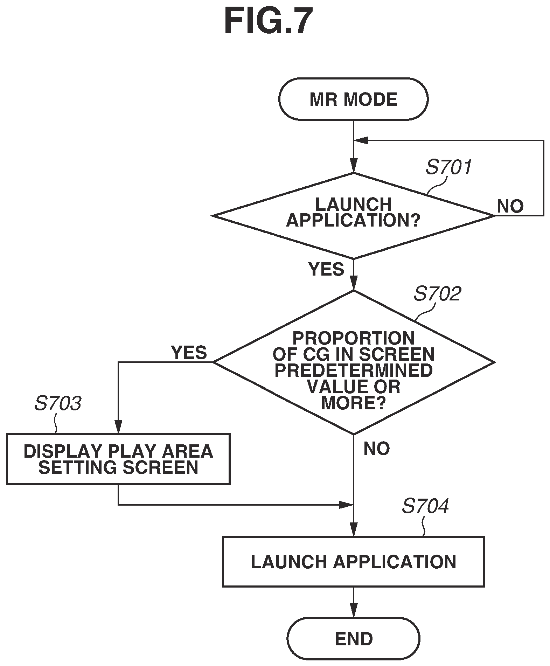

Processing for displaying a play area setting screen in accordance with a proportion of CG (virtual object) in an application launched in the MR mode will be described with reference to Figs. 6 and 7.

In a screen 600 illustrated in Fig. 6, which is a screen in the MR mode, virtual objects 601, 602, and 603 are superimposed. Here, the virtual objects 602 and 603 are semi-transparent, and the desk 302 in the real space can be seen behind the virtual object 603. Although the screen 600 illustrated in Fig. 6 is a screen in the MR mode, the virtual objects occupy more than half of the screen, making it difficult to see the real space. In other words, the displayed image of the HMD has a large display ratio of CG, which makes it difficult to confirm the video of the real space.

A flow in Fig. 7 will be described below, assuming a scene in which the home screen in the MR mode illustrated in Fig. 4D is displayed. Further, it is assumed that the play area is not set in this scene.

In step S701, the control unit 211 determines whether the user has instructed launch of an application. In a case where the control unit 211 determines that launch of the application has been instructed (YES in step S701), the processing proceeds to S702, and in a case where the control unit 211 determines that launch of the application has not been instructed (NO in step S701), the processing in step S701 is repeated.

In step S702, the control unit 211 determines whether a proportion of an image of the virtual object in a displayed composite image is a predetermined value or more. In a case where the control unit 211 determines that the proportion of the image of the virtual object in the displayed composite image is the predetermined value or more (YES in step S702), the processing proceeds to step S703, and in a case where the control unit 211 determines that the proportion of the image of the virtual object in the displayed composite image is less than the predetermined value (NO in step S702), the processing proceeds to step S704.

In the application instructed to be launched in step S701, a case is assumed in which a screen as illustrated in Fig. 6 is displayed in the MR mode. In such a case, a displayed image of the HMD has a large display ratio of CG, which may make it difficult to confirm the video of the real space, so that the play area is set before launching the application even in the MR mode.

In step S703, the control unit 211 displays the play area setting screen, and the user sets the play area in accordance with the screen.

In step S704, the control unit 211 launches the application instructed to be launched.

In a case where the proportion of the image of the virtual object in the displayed composite image is less than the predetermined value, it may be determined not to set the play area.

In the screen 600 illustrated in Fig. 6, the virtual objects 602 and 603 are semi-transparent, and the desk 302 can be visually recognized. In this way, even in a case where the proportion of the image of the virtual object in the displayed composite image is the predetermined value or more, the play area may be set only in a case where the proportion of the image of the virtual object of which transparency is less than a predetermined value is the predetermined value or more. That is, even in a case where the proportion of the image of the virtual object in the displayed composite image is the predetermined value or more, the play area may be set in a case where the proportion of the image of the virtual object excluding the image of the virtual object of which the transparency is the predetermined value or more is the predetermined value or more. In other words, the determination is made based on a proportion of the composite image occupied by a virtual object with low transparency, excluding a virtual object with high transparency. Here, transparency represents how much the virtual object transmits an object behind the virtual object, and a value of transparency becomes higher as the virtual object transmits the object behind the virtual object more. For example, since the virtual object 601 does not transmit an object behind the virtual object, its transparency is zero, and when the transparency has a higher value, an object behind the virtual object becomes easier to visually recognize.

Applied to Fig. 7, the processing in step S702 is as follows. In step S702, the control unit 211 determines whether the proportion of the displayed composite image occupied by an image of a virtual object of which transparency is less than a predetermined value is a predetermined value or more. In a case where the control unit 211 determines that the proportion of the displayed composite image occupied by the image of the virtual object of which the transparency is less than the predetermined value is the predetermined value or more (YES in step S702), the processing proceeds to step S703. Further, in a case where the control unit 211 determines that the proportion of the displayed composite image occupied by the image of the virtual object of which the transparency is less than the predetermined value is less than the predetermined value (NO in step S702), the processing proceeds to step S704. It may be determined whether the proportion of the displayed composite image occupied by the image of the virtual object is less than the predetermined value, based on a matching area obtained by comparing the displayed composite image with the captured image before CG is combined.

Not only in the determination on the screen displayed at the time of launch, but also after launch of the application, the processing in step S702 may be repeated, and in a case where the proportion of the displayed composite image occupied by the image of the virtual object becomes the predetermined value or more, the user may be prompted to set the play area.

### (Third Embodiment)

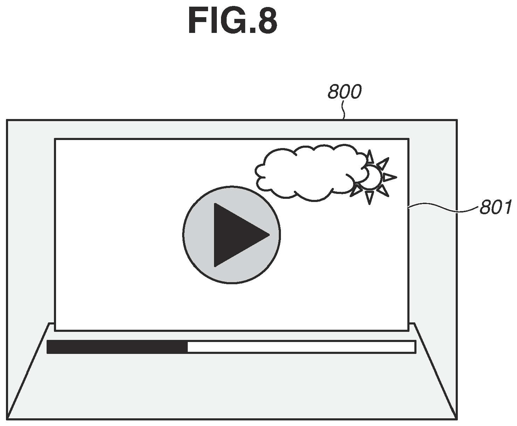

According to a third embodiment, a system will be described in which a VR application is launched without setting a play area in a case where there are few scenes involving movement in the VR application. In a case where it is assumed that the user does not move within the virtual space, an application may be launched without setting a play area. For example, in an application as illustrated in Fig. 8, although a large screen 801 is displayed on a virtual-space screen 800, a case is assumed that the screen does not change even if the user moves within the real space. In such a case, it is assumed that the user operates the HMD while remaining stationary, such as in a state of sitting on a chair, and setting a play area in such a case may cause time and effort for the user.

In a case where movement is not possible in the virtual space, the VR application may be launched without setting a boundary. In a case where the screen 801 appears to be fixed at the same position even when the HMD is moved, if the user moves, the screen 801 cannot be visually recognized; therefore, since it is assumed that the user remains stationary, the VR application may be launched without setting a boundary.

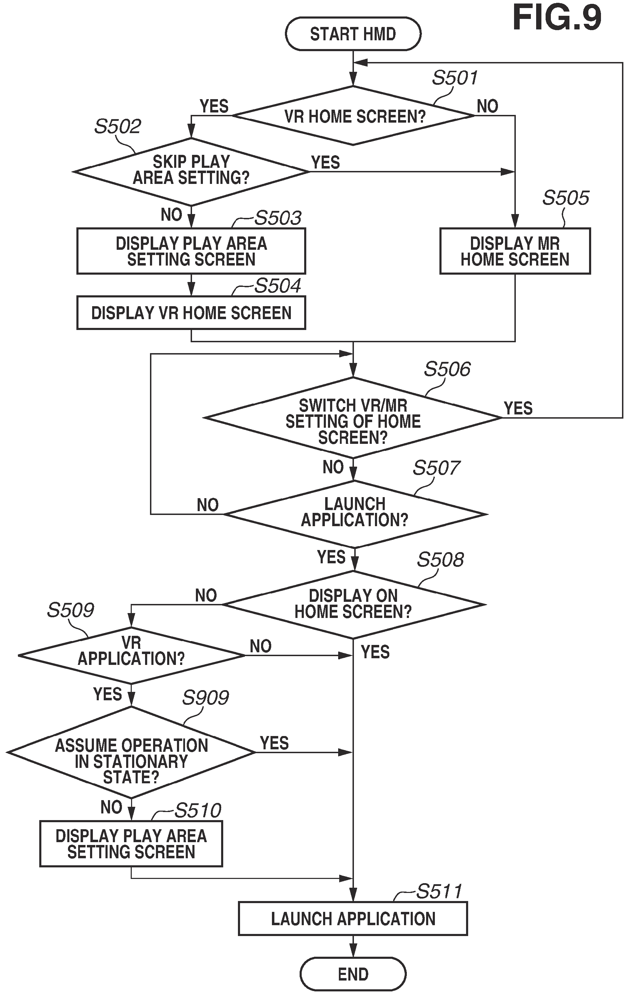

Processing for launching a VR application without setting a play area in a case where there are few scenes involving movement in the VR application will be described with reference to Fig. 9. Descriptions of parts that overlap with those described above will be omitted.

In step S509, the control unit 211 determines whether the application instructed to be launched is a VR application. In a case where it is determined that the application is a VR application (YES in step S509), the processing proceeds to step S909, and in a case where the application is not a VR application, that is, in a case where it is determined that the application is an MR application (NO in step S509), the processing proceeds to step S511.

In step S909, the control unit 211 determines whether the VR application instructed to be launched is assumed to be operated in a stationary state. In a case where it is determined that the VR application is assumed to be operated in the stationary state (YES in step S909), the processing proceeds to step S511, and in a case where it is determined that the VR application is assumed to be not operated in the stationary state, that is, in a case where the VR application is assumed to be operated while moving (NO in step S909), the processing proceeds to step S510.

In a case where the VR application is launched without setting a play area, the user may be prompted to set the play area at a timing when it is determined that the user has moved by a predetermined distance or more.

As described above, according to the embodiments, it is possible to provide a system that is capable of maintaining safety while improving operability by minimizing time and effort to set a play area.

Although the present disclosure has been described in detail based on preferred embodiments thereof, the present disclosure is not limited to these specific embodiments, and various forms that do not depart from the gist of the present disclosure are also included in the present disclosure. In addition, portions of the above-described embodiments may be appropriately combined.

### (Other Embodiments)

Note that the present disclosure can also be implemented by performing the following processing. That is, the present disclosure can also be realized by processing that supplies software (a program) for implementing the functions of the above-described embodiments to a system or an apparatus via a network or various types of storage media, and causes a computer (or a control unit, a Micro Processing Unit (MPU), or the like) of this system or apparatus to read out and execute the program code. In this case, this program, and the storage medium storing this program constitute the present disclosure.

Although the present disclosure has been described in detail based on preferred embodiments thereof, the present disclosure is not limited to these specific embodiments, and various forms that do not depart from the gist of the present disclosure are also included in the present disclosure. In addition, portions of the above-described embodiments may be appropriately combined.

Each functional unit of each of the above-described embodiments (each modification) may or may not be implemented as separate hardware. The functions of two or more functional units may be implemented by common hardware. Each of a plurality of functions of one functional unit may be implemented by separate hardware. Two or more functions of one functional unit may be implemented by common hardware. Further, each functional unit may or may not be implemented by hardware such as an application specific integrated circuit (ASIC), a field-programmable gate array (FPGA), or a digital signal processor (DSP). For example, the apparatus may include a processor and a memory (a storage medium) storing a control program therein. Then, a function of at least a part of functional units included in the apparatus may be implemented by the processor reading out the control program from the memory and executing it.

The present disclosure can also be implemented by processing that supplies, via a network or a storage medium, a program for implementing one or more functions of the above-described embodiments to a system or an apparatus, and causes one or more processors in a computer of the system or apparatus to read out and execute the program. The present disclosure can also be implemented by a circuit (e.g., an ASIC) for implementing the one or more functions.

The disclosure of the embodiments includes the following configurations, method, and program.

### [Configuration 1]

An information processing apparatus includes:
acquisition means for acquiring a captured image; and
control means for performing control to selectively display, on a display unit, a composite image of the captured image acquired by the acquisition means and an image of a virtual object and an image of a virtual space, and for determining whether to set a boundary that divides a plurality of areas in a real space, based on whether an image to be displayed on the display unit is the composite image or the image of the virtual space.

### [Configuration 2]

The information processing apparatus according to configuration 1, wherein the control means determines not to set the boundary in a case where the image to be displayed on the display unit is the composite image, and determines to set the boundary in a case where the image to be displayed on the display unit is the image of the virtual space.

### [Configuration 3]

The information processing apparatus according to configuration 1 or 2, wherein, in a case where the image to be displayed on the display unit is the composite image, the control means determines not to set the boundary in a case where a proportion of the composite image occupied by the image of the virtual object is less than a predetermined value, or determines to set the boundary in a case where the proportion of the composite image occupied by the image of the virtual object is the predetermined value or more.

### [Configuration 4]

The information processing apparatus according to any one of configurations 1 to 3, wherein the control means determines to set the boundary in a case where the image to be displayed on the display unit is the image of the virtual space and the image of the virtual space is an image based on the captured image, and determines not to set the boundary in a case where the image of the virtual space is an image not based on the captured image.

### [Configuration 5]

The information processing apparatus according to any one of configurations 1 to 4, wherein, in a case where a power supply of the information processing apparatus is started, the control means performs control to display, on the display unit, a home screen on which a predetermined application can be selected from among one or more applications, determines to set the boundary in a case where the home screen is the image of the virtual space, and determines not to set the boundary in a case where the home screen is the composite image.

### [Configuration 6]

The information processing apparatus according to configuration 5, wherein the control means determines to set the boundary in a case where an image of the application to be displayed on the display unit is the image of the virtual space, and determines not to set the boundary in a case where the image of the application to be displayed on the display unit is the composite image.

### [Configuration 7]

The information processing apparatus according to configuration 5 or 6, wherein, in a case where the boundary has been set before the home screen is displayed or before a first application is launched, when a second application is launched, the control means sets the set boundary as a boundary in the second application.

### [Configuration 8]

The information processing apparatus according to any one of configurations 1 to 7, wherein, in a case where the image of the virtual space is displayed on the display unit, the control means performs control to set the boundary before displaying the image of the virtual space.

### [Configuration 9]

The information processing apparatus according to any one of configurations 1 to 8, wherein, in a case where an operation of displaying the image of the virtual space is received from a user, the control means determines to set the boundary.

### [Configuration 10]

The information processing apparatus according to any one of configurations 1 to 9, wherein, in a case where an operation of displaying the composite image is received from a user, the control means determines not to set the boundary.

### [Configuration 11]

The information processing apparatus according to any one of configurations 1 to 10, wherein the plurality of areas includes a first area and a second area different from the first area.

### [Configuration 12]

The information processing apparatus according to configuration 11, wherein the first area is an area in which a user can move safely in the real space.

### [Configuration 13]

The information processing apparatus according to configuration 11, wherein the first area is a space in which a user performs an operation.

### [Configuration 14]

The information processing apparatus according to configuration 11, wherein the first area is an allowed area in which a user is allowed to be present, and the second area is a non-allowed area in which the user is not allowed to be present.

### [Configuration 15]

The information processing apparatus according to any one of configurations 1 to 14, further includes second acquisition means for acquiring a detection result of a position or an orientation of a controller,
wherein the control means sets the boundary based on the detection result of the position or the orientation of the controller acquired by the second acquisition means.

### [Configuration 16]

The information processing apparatus according to any one of configurations 1 to 15, further includes detection means for detecting a hand of a user from the captured image acquired by the acquisition means,
wherein the control means sets the boundary based on a position of the hand of the user detected by the detection means.

### [Configuration 17]

The information processing apparatus according to any one of configurations 1 to 16, wherein the control means sets the boundary of a specific range based on the captured image acquired by the acquisition means.

### [Configuration 18]

The information processing apparatus according to any one of configurations 1 to 17, wherein the control means determines to set the boundary in a case where the image to be displayed on the display unit is the composite image and a proportion of the composite image occupied by the image of the virtual object of which transparency is less than a predetermined value is a predetermined value or more.

### [Configuration 19]

The information processing apparatus according to any one of configurations 1 to 18, wherein the control means displays the captured image acquired by the acquisition means on the display unit in a case where it is determined that the user has gone out of the boundary in a state where the boundary is set.

### [Configuration 20]

The information processing apparatus according to any one of configurations 1 to 19, wherein the control means performs control to present warning information to the user in a case where it is determined that the user has gone out of the boundary in a state where the boundary is set.

### [Configuration 21]

The information processing apparatus according to any one of configurations 1 to 20, further includes third acquisition means for acquiring a position or an orientation of the user from the captured image acquired by the acquisition means,
wherein the control means performs control to determine whether the user has gone out of the boundary based on the position or the orientation of the user acquired by the third acquisition means.

### [Configuration 22]

The information processing apparatus according to any one of configurations 1 to 21, further includes storage means for storing the boundary set by the control means or each area divided by the boundary,
wherein the control means determines not to set the boundary in a case where the image to be displayed on the display unit is the image of the virtual space and it is determined that the user is present within the boundary stored in the storage means.

### [Configuration 23]

The information processing apparatus according to any one of configurations 1 to 22, wherein the information processing apparatus is a head mounted display and further includes the display unit.

### [Control Method]

A control method for an information processing apparatus includes:
an acquisition step of acquiring a captured image; and
a control step of performing control to selectively display, on a display unit, a composite image of the captured image acquired by the acquisition means and an image of a virtual object and an image of a virtual space, and determining whether to set a boundary that divides a plurality of areas in a real space, based on whether an image to be displayed on the display unit is the composite image or the image of the virtual space.

### [Program]

A program for causing a computer to function as each unit of the information processing apparatus according to any one of configurations 1 to 23.

### [System]

An information processing system includes:
an acquisition apparatus configured to acquire a captured image; and
a control apparatus configured to perform control to selectively display, on a display unit, a composite image of the captured image acquired by the acquisition means and an image of a virtual object and an image of a virtual space, and to determine whether to set a boundary that divides a plurality of areas in a real space, based on whether an image to be displayed on the display unit is the composite image or the image of the virtual space.

The present disclosure is not limited to the above-described embodiments, and various changes and modifications can be made without departing from the spirit and scope of the present disclosure. Accordingly, the following claims are appended to publicly disclose the scope of the present disclosure.

This application claims the benefit of Japanese Patent Application No. 2023-142964, filed September 4, 2023, which is hereby incorporated by reference herein in its entirety.

## Claims

1. An information processing apparatus comprising:
acquisition means for acquiring a captured image; and
control means for controlling a display unit to selectively display an image of a mixed reality space, which is a composite image of the captured image acquired by the acquisition means and an image of a virtual object, and an image of a virtual space, and for controlling whether to display, on the display unit, a screen for setting a boundary in a real space, based on whether an image to be displayed on the display unit is the image of the mixed reality space or the image of the virtual space.

2. The information processing apparatus according to claim 1, wherein the control means controls the display unit not to display the screen for setting the boundary in a case where the image to be displayed on the display unit is the image of the mixed reality space, and controls the display unit to display the screen for setting the boundary in a case where the image to be displayed on the display unit is the image of the virtual space.

3. The information processing apparatus according to claim 2, wherein the control means controls the display unit to display the screen for setting the boundary in a case where the image to be displayed on the display unit is the image of the virtual space and the image of the virtual space is an image based on the captured image, and controls the display unit not to display the screen for setting the boundary in a case where the image of the virtual space is an image not based on the captured image.

4. The information processing apparatus according to claim 1, wherein the control means controls the display unit to display a home screen on which a predetermined application can be selected from among one or more applications in a case where a power supply of the information processing apparatus is started, controls the display unit to display the screen for setting the boundary in a case where the home screen is the image of the virtual space, and controls the display unit not to display the screen for setting the boundary in a case where the home screen is the image of the mixed reality space.

5. The information processing apparatus according to claim 4, wherein the control means controls the display unit to display the screen for setting the boundary in a case where an image of the application to be displayed on the display unit is the image of the virtual space, and controls the display unit not to display the screen for setting the boundary in a case where the image of the application to be displayed on the display unit is the composite image.

6. The information processing apparatus according to claim 5, wherein, in a case where the boundary has been set before the home screen is displayed or before a first application is launched, when a second application is launched, the control means sets the set boundary as a boundary in the second application.

7. The information processing apparatus according to claim 2, wherein, in a case where the image of the virtual space is displayed on the display unit, the control means controls the display unit to display the screen for setting the boundary before displaying the image of the virtual space.

8. The information processing apparatus according to claim 1, wherein, in a case where an operation of displaying the image of the virtual space is received from a user, the control means controls the display unit to display the screen for setting the boundary.

9. The information processing apparatus according to claim 1, wherein, in a case where an operation of displaying the image of the mixed reality space is received from a user, the control means controls the display unit not to display the screen for setting the boundary.

10. The information processing apparatus according to claim 1, wherein the plurality of areas includes a first area and a second area different from the first area.

11. The information processing apparatus according to claim 10, wherein the first area is an allowed area in which a user is allowed to be present, and the second area is a non-allowed area in which the user is not allowed to be present.

12. The information processing apparatus according to claim 1, further comprising a second acquisition means for acquiring a detection result of a position or an orientation of a controller,
wherein the control means sets the boundary based on the detection result of the position or the orientation of the controller acquired by the second acquisition means.

13. The information processing apparatus according to claim 1, further comprising detection means for detecting a hand of a user from the captured image acquired by the acquisition means,
wherein the control means sets the boundary based on a position of the hand of the user detected by the detection means.

14. The information processing apparatus according to claim 1, wherein the control means sets the boundary of a specific range based on the captured image acquired by the acquisition means.

15. The information processing apparatus according to claim 1, wherein the control means displays the captured image acquired by the acquisition means on the display unit in a case where it is determined that the user has gone out of the boundary in a state where the boundary is set.

16. The information processing apparatus according to claim 1, wherein the control means performs control to present warning information to the user in a case where it is determined that the user has gone out of the boundary in a state where the boundary is set.

17. The information processing apparatus according to claim 1, further comprising third acquisition means for acquiring a position or an orientation of the user from the captured image acquired by the acquisition means,
wherein the control means performs control to determine whether the user has gone out of the boundary based on the position or the orientation of the user acquired by the third acquisition means.

18. The information processing apparatus according to claim 1, further comprising storage means for storing the boundary set by the control means or each area separated by the boundary,
wherein the control means controls the display unit not to display the screen for setting the boundary in a case where the image to be displayed on the display unit is the image of the virtual space and it is controlled so that the user is present within the boundary stored in the storage means.

19. The information processing apparatus according to claim 1, wherein the information processing apparatus is a head mounted display and further includes the display unit.

20. The information processing apparatus according to claim 1, wherein the image of the virtual space is an image that does not include the captured image.

21. An information processing apparatus comprising:
acquisition means for acquiring a captured image; and
control means for controlling a display unit to selectively display an image of a mixed reality space, which is a composite image of the captured image acquired by the acquisition means and an image of a virtual object, and an image of a virtual space, and for controlling the display unit to display a screen for prompting a user to select whether to set a boundary in a real space, in a case where the user has performed an operation of displaying the image of the virtual space on the display unit when the image of the mixed reality space is displayed on the display unit.

22. The information processing apparatus according to claim 21, wherein the control means performs control to set the boundary in a case where the user has performed an operation of setting the boundary, and controls the display unit to display the image of the mixed reality space without setting the boundary in a case where the user has performed an operation of not setting the boundary.

23. The information processing apparatus according to claim 21, wherein, in a case where the boundary is set to display the image of the virtual space as a home screen on which a predetermined application can be selected from among one or more applications, the control means performs control not to set the boundary even when launch of an application that displays the image of the virtual space is instructed.

24. An information processing apparatus comprising:
acquisition means for acquiring a captured image; and
control means for controlling a display unit to display an image of a mixed reality space, which is a composite image of the captured image acquired by the acquisition means and an image of a virtual object, and for controlling the display unit not to display a screen for setting the boundary in a case where a proportion of the image of the virtual object in the image of the mixed reality space displayed on the display unit is less than a predetermined value, or controlling the display unit to display the screen for setting the boundary in a case where the proportion of the image of the virtual object in the image of the mixed reality space is the predetermined value or more.

25. The information processing apparatus according to claim 24, wherein the control means controls the display unit to display the screen for setting the boundary in a case where the image to be displayed on the display unit is the image of the mixed reality space and a proportion of the image of the mixed reality space occupied by the image of the virtual object of which transparency is less than a predetermined value is a predetermined value or more.

26. An information processing apparatus comprising:
acquisition means for acquiring a captured image; and
control means for performing control to selectively switch a first mode in which an image of a mixed reality space, which is a composite image of the captured image acquired by the acquisition means and an image of a virtual object, is displayed on a display unit as a home screen for selecting an application and a second mode which is different from the first mode and in which an image of a virtual space that does not include a real space is displayed on the display unit as the home screen, and, in a case where a boundary in the real space is not set, for performing control not to switch to the second mode until the boundary is set even in a case where a user has performed an operation of switching from the first mode to the second mode.

27. An information processing apparatus comprising:
acquisition means for acquiring a captured image; and
control means for controlling a display unit to selectively display an image of a mixed reality space, which is a composite image of the captured image acquired by the acquisition means and an image of a virtual object, and an image of a virtual space, switching to the image of the virtual space without setting a boundary in a case where an operation of switching from the image of the mixed reality space to the image of the virtual space is performed after a boundary in a real space is set in advance, and for controlling the display unit to display a screen for prompting the user to select whether to set the boundary in a case where the operation of switching from the image of the mixed reality space to the image of the virtual space is performed before the boundary is set.

28. A control method for an information processing apparatus, the method comprising:
an acquisition step of acquiring a captured image; and
a control step of controlling a display unit to selectively display an image of a mixed reality space, which is a composite image of the captured image acquired by acquisition means and an image of a virtual object, and an image of a virtual space and controlling whether to display, on the display unit, a screen for setting a boundary in a real space, based on whether an image to be displayed on the display unit is the image of the mixed reality space or the image of the virtual space.

29. A program for causing a computer to function as each unit of the information processing apparatus according to claim 1.

30. An information processing system comprising:
an acquisition apparatus configured to acquire a captured image; and
a control apparatus configured to control a display unit to selectively display an image of a mixed reality space, which is a composite image of the captured image acquired by the acquisition means and an image of a virtual object, and an image of a virtual space, and control whether to display, on the display unit, a screen for setting a boundary in a real space, based on whether an image to be displayed on the display unit is the image of the mixed reality space or the image of the virtual space.
